## Europäisches Patentamt

## European Patent Office

## Office européen des brevets

(11) Veröffentlichungsnummer: **0 074 046**
**A1**

(12) ## EUROPÄISCHE PATENTANMELDUNG

(21) Anmeldenummer: **82107944.9**

(22) Anmeldetag: **30.08.82**

(51) Int. Cl.³: **C 08 L 25/12**
**C 08 L 51/00, C 08 L 51/04**

(30) Priorität: **05.09.81 DE 3135252**

(43) Veröffentlichungstag der Anmeldung:
**16.03.83 Patentblatt 83/11**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Brandstetter, Franz, Dr.**
**Ritterbuechel 45**
**D-6730 Neustadt(DE)**

(72) Erfinder: **McKee, Graham Edmund, Dr.**
**Kastanienweg 8**
**D-6940 Weinheim(DE)**

(72) Erfinder: **Overhoff, Heinz-Juergen, Dr.**
**Max-Slevogt-Strasse 13B**
**D-6710 Frankenthal(DE)**

(72) Erfinder: **Priebe, Edmund, Dr.**
**Bensheimer Ring 7A**
**D-6710 Frankenthal(DE)**

(72) Erfinder: **Swoboda, Johann, Dr.**
**Sternstrasse 122**
**D-6700 Ludwigshafen(DE)**

(54) **Thermoplastische Formmasse.**

(57) Die Erfindung betrifft eine thermoplastische Formmasse, aus einer Hartkomponente A und zwei Pfropfmischpolymerisaten B und C. Die Hartkomponente A ist in einem Anteil von 50 is 90 Gew.%, vorhanden und stellt ein Copolymerisat von Styrol mit Acrylnitril dar.

Das Pfropfmischpolymerisat B ist in einem Anteil von 5 bis 45 Gew.% zugegen und wird gebildet aus 40 bis 80 Gew.% eines vernetzten Acrylester-Polymerisates mit einer mittleren Teilchengröße von 0,02 bis 0,15 µm ($d_{50}$-Wert der integralen Massenverteilung) als Pfropfgrundlage, worauf 20 bis 60 Gew.% einer Mischung von Styrol und Acrylnitril aufgepfropft ist.

Das Pfropfmischpolymerisat C macht 5 bis 45 Gew.% aus und besteht aus 50 bis 85 Gew.% eines Copolymerisats, das gebildet wird aus 20 bis 80 Gew.% Acrylsäurebutylester und/oder Acrylsäureethylhexylester und 20 bis 80 Gew.% Butadien mit einer mittleren Teilchengröße > 0,20 µm ($d_{50}$-Wert der integralen Massenverteilung) worauf 15 bis 50 Gew.% einer Mischung von Styrol und Acrylnitril aufgepfropft ist.

Die erfindungsgemäße Formmasse wird zur Herstellung von Formkörpern oder Formteilen verwendet.

BASF Aktiengesellschaft O.Z.0050/035389

Thermoplastische Formmasse

Die Erfindung betrifft eine thermoplastische Formmasse aus einer Hartkomponente, vorzugsweise einem S/AN-Copolymerisat, und 2 Pfropfmischpolymerisaten, wovon eines auf Basis von vernetztem Acrylat (ASA) und das andere auf Basis eines Butadien-Acrylat-Copolymerisates als Pfropfgrundlage für S/AN aufgebaut ist.

Zum Stand der Technik nennen wir:

(1)  DE-PS 12 38 207
(2)  US-PS 3 055 859 und
(3)  DE-PS 12 60 135

Es ist bekannt, thermoplastisch verarbeitbare schlagzähe Formmassen herzustellen, indem man Styrol/Acrylnitril-Copolymerisate durch Einarbeiten von Kautschuken modifiziert. Dies geschieht im allgemeinen durch Pfropfmischpolymerisation von Styrol und Acrylnitril in Gegenwart des Kautschuks sowie gegebenenfalls nachträgliches Abmischen dieses Pfropfproduktes mit einer separat hergestellten Hartkomponente, die im allgemeinen aus einem Styrol-Acrylnitril-Copolymerisat besteht. Je nach Art des bei der Herstellung eingesetzten Kautschuks werden Formmassen mit unterschiedlichem Eigenschaftsbild erhalten.

Es sind außerdem sogenannte ABS-Polymerisate bekannt, bei denen als Kautschuk zur Schlagfestmodifizierung Copolymerisate aus Butadien mit Acrylestern sowie Vinylethern verwendet werden. Formkörper aus derartigen Formmassen zeichnen sich insbesondere durch gute Alterungsbeständigkeit und eine geringere Empfindlichkeit gegenüber der Einwirkung von Licht aus.

Vo/P Es zeigt sich jedoch, daß solche Formmassen beim Extrudieren oder Pressen Formteile ergeben, deren Farbton meist schon nach einer Lagerung von wenigen Tagen bei Zutritt von Frischluft merklich aufhellt, wodurch sie ein weißliches, schimmelartiges Aussehen annehmen. Diese Erscheinung wirkt besonders bei dunkleren Einfärbungen störend.

Bei diesem Effekt handelt es sich nicht um eine übliche Alterungserscheinung bei Kunststoffen. Es kann vielmehr angenommen werden, daß Kautschukpartikel, die direkt an der Oberfläche des Formteils sitzen, vermutlich durch in der Luft enthaltenes Ozon angegriffen werden und unter der Wirkung von thermischen Schrumpfspannungen aufreißen. Besonders bei starker Agglomeration der Kautschukteilchen bilden sich so weit verzweigte Kavernen in der Oberflächenschicht. Diese Materialschädigung macht sich makroskopisch durch vermehrte Lichtstreuung bemerkbar, da für die Remission des Lichts jetzt nicht nur der Brechzahlunterschied zwischen Kautschuk- und Hartkomponente, sondern die beträchtlich größere Differenz gegenüber der Luft in den Hohlräumen maßgebend ist.

Problematisch ist außerdem, daß die Eigenschaften von Formteilen, die aus derartigen Formmassen hergestellt worden sind, mitunter stark von den Verarbeitungsbedingungen abhängen. Formmassen auf der Grundlage derartiger Polymerisate, die eine optimale Eigenschaftskombination aufweisen, jedoch noch nicht in allen Eigenschaften befriedigen, sind in (1) beschrieben.

Des weiteren sind kautschukhaltige SAN-Copolymere bekannt, wobei gesättigte Kautschuke eingesetzt werden [vgl. (2) und (3)]. Hierbei haben sich insbesondere die kautschukelastischen, vorzugsweise vernetzten Acrylsäureester-Polymerisate als geeignet erwiesen. Die entsprechenden Form- massen, die auch als ASA-Polymerisate bezeichnet werden, werden vornehmlich verwendet für Gartenmöbel, Boote, Schilder, Straßenlampenabdeckungen usw., wobei für viele Anwendungszwecke gefärbte Produkte, die einen leuchtenden und brillianten Farbeindruck geben, gewünscht werden.

Die Herstellung der witterungs- und alterungsbeständigen ASA-Polymerisate ist u.a. in (2) und (3) beschrieben. Dabei wird zunächst das als Pfropfgrundlage dienende kautschukartige Acrylsäureester-Polymerisat durch Emulsionspolymerisation von Acrylsäureestern hergestellt. Der dabei entstehende Latex hat einen mittleren Teilchendurchmesser im allgemeinen im Bereich <0,15 µm. Anschließend wird auf diesen Polyacrylsäureester-Latex ein Gemisch von Styrol und Acrylnitril aufgepfropft, wobei die Pfropfmischpolymerisation ebenfalls vorzugsweise in Emulsion durchgeführt wird. Zur Erzielung von ASA-Polymerisaten mit guten mechanischen Eigenschaften hat es sich als notwendig erwiesen, daß der als Pfropfgrundlage dienende Polyacrylsäureester-Kautschuk vernetzt ist, d.h., daß bei seiner Herstellung die Acrylsäureester mit geringen Mengen von bifunktionellen, vernetzend wirkenden Monomeren copolymerisiert werden.

Es bestand die Aufgabe, solche Produkte zu schaffen, die eine gute Schlagzähigkeit, geringe Eigenfarbe und vor allem keine Neigung zur Schimmelbildung zeigen.

Es wurde nun gefunden, daß man schlagzähe thermoplastische Formmassen mit guter Schlagzähigkeit und geringer Eigenfarbe und ohne Neigung zur Schimmelbildung erhält, wenn man Massen einsetzt, die zwei verschiedene Kautschuke, getrennt oder gemeinsam gepfropft, enthalten.

Diese Aufgabe wird durch die erfindungsgemäße Formmasse gemäß Patentanspruch 1 gelöst.

Nachstehend werden die Komponenten der erfindungsgemäßen Formmasse, deren Herstellung und die Herstellung der Formmasse beschrieben.

Komponente A

Die Komponente A ist in einem Anteil von 50 bis 90 Gew.%, insbesondere von 55 bis 80 Gew.%, bezogen auf [A + B + C], in der erfindungsgemäßen Formmasse vorhanden.

Die in der erfindungsgemäßen Formmasse enthaltende Komponente (A) ist eine Hartkomponente aus einem oder mehreren Copolymerisaten von Styrol und/oder $\alpha$-Methylstyrol mit Acrylnitril. Der Acrylnitril-Gehalt in diesen Copolymerisaten der Hartkomponente (A) soll 20 bis 40 Gew.%, bezogen auf das jeweilige Copolymerisat der Hartkomponente, betragen. Zu dieser Hartkomponente (A) zählen auch wie weiter unten erläutert, die bei der Pfropfmischpolymerisation zur Herstellung der Komponenten (B) und (C) entstehenden freien, nicht gepfropften Styrol/Acrylnitril-Copolymerisate. Je nach den bei der Pfropfmischpolymerisation für die Herstellung der Pfropfmischpolymerisate (B) und (C) gewählten Bedingungen kann es möglich sein, daß bei der Pfropfmischpolymerisation schon ein hinreichender Anteil an Hartkomponente (A) gebildet worden ist. Im allgemeinen wird es jedoch nötig sein, die bei der Pfropfmischpolymerisation erhaltenen Produkte mit zusätzlicher, separat hergestellter Hartkomponente (A) zu mischen.

Bei der separat hergestellten Hartkomponente (A) kann es sich um ein Styrol/Acrylnitril-Copolymerisat, ein $\alpha$-Methylstyrol/Acrylnitril-Copolymerisat oder ein $\alpha$-Methyl-

styrol/Styrol/Acrylnitril-Terpolymerisat handeln. Diese Copolymerisate können einzeln oder auch in Mischung miteinander für die Hartkomponente eingesetzt werden, so daß es sich bei der Hartkomponente (A) der erfindungsgemäßen Mischungen beispielsweise um eine Mischung aus einem Styrol/Acrylnitril-Copolymerisat und einem $\alpha$-Methylstyrol/-Acrylnitril-Copolymerisat handeln kann. In dem Fall, in dem die Hartkomponente (A) der erfindungsgemäßen Massen aus einer Mischung von einem Styrol/Acrylnitril-Copolymerisat und einem $\alpha$-Methylstyrol/Acrylnitril-Copolymerisat besteht, soll der Acrylnitril-Gehalt der beiden Copolymerisate tunlichst nicht mehr als 10 Gew.%, vorzugsweise nicht mehr als 5 Gew.%, bezogen auf das Copolymerisat, voneinander abweichen. Die Hartkomponente (A) der erfindungsgemäßen Massen kann jedoch auch nur aus einem einzigen Styrol/Acrylnitril-Copolymerisat bestehen, nämlich dann, wenn bei den Pfropfmischpolymerisationen zur Herstellung der Komponenten (B) und (C) als auch bei der Herstellung der zusätzlichen, separat hergestellten Hartkomponenten von dem gleichen Monomer-Gemisch aus Styrol und Acrylnitril ausgegangen wird.

Die Hartkomponente (A) kann nach den herkömmlichen Methoden erhalten werden. So kann die Copolymerisation des Styrols und/oder $\alpha$-Methylstyrols mit dem Acrylnitril in Masse, Lösung, Suspension oder wäßriger Emulsion durchgeführt werden. Die Hartkomponente (A) hat vorzugsweise eine Viskositätszahl von 40 bis 100, insbesondere von 50 bis 85 [ml/g].

Komponente B

Die Komponente B repräsentiert mindestens ein Pfropfmischpolymerisat und ist in einem Anteil von 5 bis 45 Gew.%, insbesondere von 5 bis 40 Gew.%, jeweils bezogen auf

0074046

[A + B + C], in der Formmasse vorhanden. Sie enthält die Pfropfgrundlage $B_1$ und das Pfropfreis $B_2$ als Bestandteile. Sie ist aufgebaut aus 40 bis 80 Gew.% $B_1$ und 20 bis 60 Gew.% $B_2$, jeweils bezogen auf B.

Die Herstellung der Komponente (B) erfolgt in zwei Stufen. Zunächst wird ein vernetztes Acrylester-polymerisat ($B_1$) hergestellt, auf das dann in einem zweiten Schritt Styrol und Acrylnitril aufgepfropft wird.

Die Herstellung des Pfropfmischpolymerisates erfolgt in an sich bekannter Weise.

Als Pfropfgundlage ($B_1$) dient ein vernetztes Acrylsäure-ester-Polymerisat mit einer Glasübergangstemperatur unter $0^{\circ}$C. Das vernetzte Acrylsäureester-Polymerisat soll vorzugsweise eine Glastemperatur unter $-20^{\circ}$C, insbesondere unter $-30^{\circ}$C besitzen. Die Ermittlung der Glasübergangstemperatur des Acrylsäureester-Polymerisates kann z.B. nach der DSC-Methode (K.H. Illers, Makromol. Chemie 127 (1969), S. 1) erfolgen. Für die Herstellung der Acrylsäureester-Polymerisate kommen insbesondere die Acrylsäurealkylester mit 2 bis 8 Kohlenstoffatomen, vorzugsweise mit 4 bis 8 Kohlenstoffatomen, im Alkylrest in Betracht. Als Acrylsäurealkylester, die zur Herstellung der Acrylsäureester-Polymerisate geeignet sind, seien besonders Acrylsäure-n-butylester und Acrylsäureethylhexylester genannt. Die Acrylsäureester können bei der Herstellung der als Pfropfgrundlage dienenden Acrylsäureester-Polymerisate allein oder auch in Mischung eingesetzt werden.

Um vernetzte Acrylsäureester-Polymerisate zu erhalten, wird die Polymerisation der Acrylsäureester in Gegenwart von 0,5 bis 10 Gew.%, vorzugsweise 1 bis 5 Gew.%, bezogen auf die bei der Herstellung der Pfropfgrundlagen eingesetzten gesamten Monomeren, eines copolymerisierbaren,
mehrfunktionellen, vorzugsweise bifunktionellen, die Vernetzung bewirkenden Monomeren durchgeführt. Als solche bi-
oder mehrfunktionellen Vernetzungs-Monomeren eignen sich
Monomere, die vorzugsweise zwei, gegebenenfalls auch mehr,
zur Copolymerisation befähigte ethylenische Doppelbindungen enthalten, die nicht in den 1,3-Stellungen konjugiert
sind. Geeignete Vernetzungs-Monomere sind beispielsweise
Divinylbenzol, Diallylmaleat, Diallylfumarat oder Diallylphthalat. Als besonders günstiges Vernetzungs-Monomeres
hat sich der Acrylsäureester des Tricyclodecenylalkohols
erwiesen [vgl. (3)].

Die Herstellung des Pfropfmischpolymerisats (B) kann beispielsweise nach der in (3) beschriebenen Methode erfolgen.
Hierzu wird zunächst die Pfropfgrundlage $(B_1)$ hergestellt,
indem der oder die Acrylsäureester und das mehrfunktionelle
die Vernetzung bewirkende Monomere, gegebenenfalls zusammen
mit den weiteren Comonomeren, in wäßriger Emulsion in an
und für sich bekannter Weise bei Temperaturen zwischen
20 und 100°C, vorzugsweise zwischen 50 und 80°C polymerisiert werden. Es können die üblichen Emulgatoren, wie Alkalisalze von Alkyl- oder Alkylarylsulfonsäuren, Alkylsulfate,
Fettalkoholsulfonate, Salze höherer Fettsäuren mit 10 bis
30 Kohlenstoffatomen oder Harzseifen, verwendet werden.
Vorzugsweise werden die Natriumsalze von Alkylsulfonaten
oder Fettsäuren mit 10 bis 18 Kohlenstoffatomen angewendet. Es ist günstig, die Emulgatoren in Mengen von 0,5 bis
5 Gew.%, insbesondere von 1 bis 2 Gew.%, bezogen auf die
Monomeren der Pfropfgrundlage $(B_1)$ einzusetzen. Im allgemeinen wird bei einem Wasser- zu Monomeren-Verhältnis von
2 : 1 bis 0,7 : 1 gearbeitet. Als Polymerisationsinitiatoren dienen insbesondere die gebräuchlichen Persulfate,
wie Kaliumpersulfat, es können jedoch auch Redox-Systeme

0074046

zum Einsatz gelangen. Die Initiatoren werden im allgemeinen in Mengen von 0,1 bis 1 Gew.%, bezogen auf die Monomeren der Pfropfgrundlage ($B_1$) eingesetzt. Als weitere Polymerisationshilfsstoffe können die üblichen Puffersubstanzen, durch welche pH-Werte von vorzugsweise 6 bis 9 eingestellt werden - z.B. Natriumbicarbonat und Natriumpyrophosphat - sowie 0 bis 3 Gew.% eines Molekulargewichtsreglers - wie Mercaptane, Terpene oder dimeres -Methylstyrol - bei der Polymerisation verwendet werden. Die genauen Polymerisationsbedingungen, insbesondere Art, Dosierung und Menge des Emulgators, werden innerhalb der oben angegebenen Bereiche im einzelnen so bestimmt, daß der erhaltene Latex des vernetzten Acrylsäureester-Polymerisats einen $d_{50}$-Wert im Bereich von 0,02 bis 0,15 um, vorzugsweise im Bereich von 0,05 bis 0,10 um besitzt.

Zur Herstellung des Pfropfmischpolymerisats (B) wird dann in einem zweiten Schritt in Gegenwart des so erhaltenen Latex des Acrylester-Polymerisats ein Monomeren-Gemisch aus Styrol und Acrylnitril polymerisiert, wobei das Gewichtsverhältnis von Styrol zu Acrylnitril in dem Monomeren-Gemisch im Bereich von 75 : 25 bis 65 : 35, vorzugsweise bei 70 : 30, liegen soll. Es ist vorteilhaft, diese Pfropfmischpolymerisation von Styrol und Acrylnitril auf das als Pfropfgrundlage dienende Acrylester-Polymerisat auch in wäßriger Emulsion unter den vorstehend aufgeführten Bedingungen durchzuführen. Die Pfropfmischpolymerisation kann zweckmäßig im gleichen System erfolgen wie die Emulsionspolymerisation zur Herstellung der Pfropfgrundlage ($B_1$), wobei, falls notwendig, weiterer Emulgator und Initiator zugegeben werden kann. Das aufzupfropfende Monomeren-Gemisch aus Styrol und Acrylnitril kann dem Reaktionsgemisch auf einmal, absatzweise in mehreren Stufen oder vorzugsweise kontinuierlich während der Polymerisation zugegeben werden. Die Pfropfmischpolymerisation des Gemischs von Styrol und Acrylnitril in Gegenwart des Acrylester-
-Polymerisats wird so geführt, daß ein Pfropfgrad von 20
bis 60 Gew.%, vorzugsweise von 25 bis 40 Gew.%, im Pfropfmischpolymerisat (B) resultiert. Da die Pfropfausbeute
bei der Pfropfmischpolymerisation nicht 100%ig ist, muß
eine etwas größere Menge des Monomeren-Gemisches aus
Styrol und Acrylnitril bei der Pfropfmischpolymerisation
eingesetzt werden, als es dem gewünschten Pfropfgrad entspricht. Die Steuerung der Pfropfausbeute bei der Pfropfmischpolymerisation und somit des Pfropfgrades des fertigen Pfropfmischpolymerisats (B) ist jedem Fachmann geläufig und kann beispielsweise u.a. durch die Dosiergeschwindigkeit der Monomeren oder durch Reglerzugabe erfolgen
(Chauvel, Daniel, ACS Polymer Preprints 15 (1974),
Seite 329 ff.). Bei der Emulsions-Pfropfmischpolymerisation
entstehen im allgemeinen etwa 5 bis 15 Gew.-%, bezogen
auf das Pfropfmischpolymerisat, an freiem, ungepfropftem
Styrol/Acrylnitril-Copolymerisat. Der Anteil des Pfropfmischpolymerisats (B) in dem bei der Pfropfmischpolymerisation erhaltenen Polymerisationsprodukt wird nach der
weiter unten angegebenen Methode ermittelt.

Komponente C

Als Komponente C wird mindestens ein Pfropfmischpolymerisat verwendet. Die Komponente C ist in einem Anteil von
5 bis 45 Gew.%, vorzugsweise 5 bis 30 Gew.%, jeweils bezogen auf die Summe [A + B + C], in der erfindungsgemäßen
Formmasse zugegen.

Die Komponente C enthält die Pfropfgrundlage $C_1$ als Bestandteil in Mengen von 50 bis 85 Gew.%, insbesondere
65 bis 80 Gew.%, (jeweils bezogen auf C, und das Pfropfreis $C_2$ (Mengen 100-Pfropfgrundlage).

Die Herstellung der Komponente (C) erfolgt ebenfalls in zwei Stufen. Zunächst wird ein Copolymerisat ($C_1$) hergestellt, auf das dann in einem zweiten Schritt Styrol und Acrylnitril zur Herstellung des Polymerisates (C) aufgepfropft wird.

Das Mischpolymerisat ($C_1$) wird durch übliche Polymerisation in wäßriger Emulsion hergestellt. Die Comonomeren, die dieses Mischpolymerisat ($C_1$) bilden, sind Acrylsäurebutylester und/oder Acrylsäureethylhexylester, die in Mengen von 20 bis 80 Gew.-% eingesetzt werden und Butadien, das 20 bis 40, vorzugsweise 30 bis 35 Gew.-% der Comonomeren ausmacht. Es werden die üblichen Emulgatoren, wie Natriumsalze von Paraffinsulfonsäuren mit 12 bis 18 Kohlenstoffatomen, Arylsulfonate, Natriumsalze von Fettsäuren mit etwa 16 bis 18 Kohlenstoffatomen, Fettalkoholsulfate mit etwa 12 bis 18 Kohlenstoffatomen und ähnliche Emulgatroren in Mengen von etwa 0,1 bis 3 Gew.-%, verwendet, und als Polymerisationsinitiatoren werden im allgemeinen radikalbildende Verbindungen, wie Persulfate, Peroxide oder Hydroperoxide oder auch Azoverbindungen, verwendet.

In der nächsten Stufe kann der Latex des Mischpolymerisates ($C_1$) agglomeriert werden. Dies geschieht z.B. durch Zugabe einer Dispersion eines Acrylesterpolymerisates. Vorzugsweise werden Dispersionen von Copolymerisaten von Acrylestern von Alkoholen mit 1 bis 4 Kohlenstoffatomen, vorzugsweise von Ethylacrylat, mit 0,1 bis 10 Gew.-% wasserlösliche Polymerisate bildenden Monomeren, wie z.B. Acrylsäure, Methacrylsäure, Acrylamid oder Methacrylamid, N-Methylolmethacrylamid oder N-Vinylpyrrolidon, eingesetzt. Besonders bevorzugt ist ein Copolymerisat aus 96 % Ethylacrylat und 4 % Methacrylamid. Die Agglomerierdispersion kann gegebenenfalls auch mehrere der genannten Acrylesterpolymerisate enthalten.

Die Konzentration der Acrylesterpolymerisate in der Dispersion soll im allgemeinen zwischen 3 und 40 Gew.% liegen. Bei der Agglomeration werden 0,2 bis 10, vorzugsweise 1 bis 5, Gewichtsteile der Agglomerierdispersion auf 100 Teile des Kautschuklatex, jeweils berechnet auf Feststoffe, eingesetzt. Die Agglomeration wird durch Zugabe der Agglomerierdispersion zum Kautschuk durchgeführt. Die Geschwindigkeit der Zugabe ist normalerweise nicht kritisch, im allgemeinen dauert sie etwa 1 bis 30 Minuten bei einer Temperatur zwischen 20 und 90°C, vorzugsweise zwischen 30 und 75°C.

Unter den genannten Bedingungen wird nur ein Teil der Kautschukteilchen agglomeriert, so daß eine bimodale oder breite Verteilung entsteht. Dabei liegen nach der Agglomeration im allgemeinen mehr als 50, vorzugsweise zwischen 75 und 95 % der Teilchen (Zahlen-Verteilung) im nicht agglomerierten Zustand vor. Der mittlere Durchmesser der Kautschukteilchen soll > 0,2 um sein. Vorzugsweise liegt er von 0,25 bis 0,6 um, insbesondere zwischen 0,26 und 0,40 um. Der erhaltene agglomerierte Kautschuklatex ist verhältnismäßig stabil, so daß er ohne weiteres gelagert und transportiert werden kann, ohne daß Koagulation eintritt.

Die Herstellung des Pfropfmischpolymerisates (C) wird dann durch Pfropfen in einem zweiten Schritt in der Weise, wie bei der Herstellung des Pfropfmischpolymerisates (B) beschrieben, mit einem Monomerengemisch aus Styrol und Acrylnitril vorgenommen.

Es ist aber auch möglich, ein Gemisch der Pfropfmischpolymerisate (B) und (C) in einem Arbeitsgang aus einem Gemisch der Pfropfgrundlagen ($B_1$) und ($C_1$) und der Mischung aus Styrol und Acrylnitril ($B_2$) und ($C_2$) herzustellen. Hierzu werden zunächst, wie oben beschrieben, die Pfropfgrundlagen ($B_1$) und ($C_1$) getrennt, z.B. in Form von Latices gemischt, und mit Styrol und Acrylnitril ($B_2$) und ($C_2$) gepfropft. Das Pfropfen der Mischung der Pfropfgrundlagen erfolgt, wie bei der Herstellung der Pfropfmischpolymerisate (B) und (C) beschrieben.

Komponente D

Die erfindungsgemäßen Formmassen aus den Komponenten (A), (B) und (C) können als weitere Komponente (D) Zusatzstoffe enthalten, wie sie für ABS- oder ASA-Polymerisate üblich und gebräuchlich sind. Als solche Zusatzstoffe seien genannt: Füllstoffe, weitere verträgliche Kunststoffe, Farbstoffe oder Pigmente, Antistatika, Antioxidantien, Flammschutzmittel, insbesondere Octabromdiphenylether, und Schmiermittel. Die Zusatzstoffe werden in üblichen Mengen, vorzugsweise in Mengen von 0,1 bis zu insgesamt etwa 30 Gew.%, bezogen auf die Mischung (A + B + C), eingesetzt.

Als Antistatika eignen sich z.B. Polyethylenglykole, Polypropylenglykole, insbesondere kommen Copolymere aus Ethylenoxid und Propylenoxid und mit SAN-gepfropfte Polyether in Betracht. Ferner kommen noch Salze von Alkyl- oder Alkylarylsulfonsäuren oder ethoxylierte langkettige Alkylamine in Frage.

Herstellung der erfindungsgemäßen Formmasse

Die Mischung der Hartkomponente (A) mit den bei der Pfropfmischpolymerisation zur Herstellung der Komponenten (B) und (C) erhaltenen Produkte zu den erfindungsgemäßen Massen kann so vorgenommen werden, daß ein Teil der Hartkomponente (A) zunächst mit Komponente (B), und der restliche Teil der Hartkomponente (A) zunächst mit der Komponente (C) gemischt wird, worauf anschließend die beiden Teilmischungen (A + B) und (A + C) zusammengegeben und vermischt werden. Es ist aber genauso möglich, zunächst die Komponenten (B) und (C) zu vermischen und in dieses Gemisch aus den beiden Pfropfmischpolymerisaten (B + C) anschließend die separat hergestellte Hartkomponente (A) einzumischen. Vorzugsweise werden dabei die Komponenten (A), (B) und (C) in solchen Mengen und in solchen Verhältnissen miteinander gemischt, daß in der Gesamt-Mischung (A + B + C) die beiden als Pfropfgrundlage dienenden Acrylester- bzw. Butadien-Acrylsäureester-Polymerisate $(B_1)$ und $(C_1)$ im Gewichtsverhältnis $(B_1)$ : $(C_1)$ von etwa 90 : 10 bis etwa 10 : 90 und insbesondere von 60 : 40 bis 50 : 50 vorliegen, und ferner der Anteil der beiden als Pfropfgrundlage dienenden Polymerisate zusammen $(B_1 + C_1)$ in der gesamten Mischung (A + B + C) 10 bis 35 Gew.%, insbesondere 15 bis 30 Gew.%, bezogen auf die Mischung (A + B + C), ausmacht.

Das Mischen der Komponenten (A), (B) und (C) kann nach bekannten Methoden erfolgen. Wenn die Komponenten z.B. durch Emulsions-Polymerisation hergestellt worden sind, ist es z.B. möglich, die erhaltenen Polymer-Dispersionen miteinander zu vermischen, darauf die Polymerisate gemeinsam auszufällen und das Polymerisat-Gemisch aufzuarbeiten. Vorzugsweise geschieht jedoch das Mischen der Komponenten (A), (B) und (C) durch gemeinsames Extrudieren, Kneten oder Verwalzen der Komponenten, wobei die Komponenten notwendigenfalls zuvor aus der bei der Polymerisation erhaltenen Lösung oder wäßrigen Dispersion isoliert worden sind. Die in wäßriger Dispersion erhaltenen Produkte der Pfropfmischpolymerisationen (Komponenten (B) und (C)) können auch nur teilweise entwässert werden und als feuchte Krümel mit der Hartkomponente (A) vermischt werden, wobei dann während des Vermischens die vollständige Trocknung der Pfropfmischpolymerisate erfolgt.

Es zeigte sich nun, daß die erfindungsgemäßen Formmassen neben einer guten Schlagzähigkeit geringe Eigenfarbe und keine Neigung zur Schimmelbildung besitzen.

Die erfindungsgemäßen Massen lassen sich nach den für die Thermoplastverarbeitung üblichen Verfahren, wie Extrusion und Spritzgießen, zu den verschiedenartigsten Formteilen wie Gehäuse für Haushaltsgeräte, Telefone, Platten, Rohre und Kinderspielzeug verarbeiten. Wie erwähnt, eignen sich die erfindungsgemäßen Massen dabei insbesondere zur Herstellung von farbigen Formteilen der genannten Art, wie sie insbesondere bei Gehäusen für Elektrogeräte, Kinderspielzeug und Möbel Anwendung finden.

Die in den Beispielen und Vergleichsversuchen aufgeführten Produkteigenschaften wurden wie folgt gemessen:

1. Die mittlere Teilchengröße wurde aus der integralen Massenverteilung durch Ultrazentrifugen-Messung bestimmt (W. Scholtan, H. Lange Kolloid-Z. und Z. Polymere 250 (1972) 782 bis 796. Unter mittlerer Teilchengröße wird dabei immer der $d_{50}$-Wert verstanden.

2. Die Ermittlung der Pfropfausbeute und somit des Anteils des Pfropfmischpolymerisats in dem bei der Pfropfmischpolymerisation erhaltenen Produkt erfolgte durch Extraktion dieses Polymerisationsproduktes mit Methylethylketon bei 25°C. Der Pfropfgrad der Pfropfmischpolymerisate, d.h. der prozentuale Anteil vom im Pfropfmischpolymerisat enthaltenen gepfropften Styrol und Acrylnitril, ergibt sich am einfachsten aus der elementaranalytischen Bestimmung von Stickstoff (aus Acrylnitril) und Sauerstoff (aus Acrylester) im Methylethylketon unlöslichen Gel.

3. Die Kerbschlagzähigkeit der Massen wurde nach DIN 53 453 an gespritzten Normkleinstäben bei 23°C ermittelt. Die Spritztemperatur für die Normkleinstäbe betrug dabei 250°C.

4. Die Viskositätszahlen wurden in 0,5%iger Lösung in Dimethylformamid als Lösungsmittel bei einer Temperatur von 25°C ermittelt.

5. Der Yellowness Index wurde an bei 250°C spritzgegossenen Platten (50x40x2 mm) bestimmt.

6. Zur Beurteilung der Schimmelneigung wurden die unter 5. genannten Platten 48 Stunden in einer Luftatmosphäre, die 2 ppm Ozon enthielt, gelagert. Danach wurde visuell geprüft, ob die Oberfläche weiß wurde.

Zur Herstellung erfindungsgemäßer Formmassen wurden die folgenden Komponenten verwendet:

0074046

Hartkomponente (A)

Durch kontinuierliche Lösungspolymerisation nach einem Verfahren wie es beispielsweise im Kunststoff-Handbuch, Vieweg-Daumiller, Band V, (Polystyrol), Carl Hanser-Verlag, München 1969, Seite 124, Zeilen 12 ff beschrieben ist, wurde ein Copolymerisat, das 65 Teile Styrol und 35 Teile Acrylnitril einpolymerisiert enthält, hergestellt, das eine Viskositätszahl von 80 [ml/g] aufwies.

Pfropfmischpolymerisat (B)

10 Teile Acrylsäurebutylester und 0,7 Teile Tricyclodecenylacrylat wurden in 90 Teilen Wasser unter Zusatz von 0,7 Teilen Na-$C_{14}$-Alkylsulfonat und 0,2 Teilen Kaliumperoxodisulfat unter Rühren innerhalb von 45 Minuten auf 65°C erwärmt. Nach dem Erreichen der Temperatur gab man eine Mischung von 50 Teilen Acrylsäurebutylester und 1,8 Teilen Tricyclodecenylacrylat innerhalb von 4 Stunden hinzu. Nach Ende des Zulaufs wurde der Polymerisationsansatz noch 1 Stunde bei 65°C gerührt. Der Feststoffgehalt der Polymerisatdispersion betrug ca. 41 %. Nach Zusatz von 60 Teilen Wasser, 0,08 Teilen Dilauroylperoxid und 0,08 Teilen Kaliumperoxodisulfat ließ man zur Herstellung des Pfropfmischpolymerisates 51 Teile einer Mischung aus Styrol und Acrylnitril (70/30) innerhalb von 4 Stunden bei 65°C unter Rühren zulaufen. Der Umsatz, bezogen auf Styrol/-Acrylnitril war praktisch quantitativ. Der Pfropfgrad lag bei ca. 40 %. Die erhaltene Dispersion des Pfropfmischpolymerisates wurde durch Zusatz einer 0,75%igen wäßrigen Calciumchloridlösung gefällt. Das abgetrennte Festprodukt wurde mit destilliertem Wasser gewaschen.

0074046

Pfropfmischpolymerisat (C)

In einem Rührautoklaven, der 150 Teile destilliertes Wasser, 1 Teil Na-$C_{14}$-Alkylsulfonat, 0,2 Teile Kaliumperoxodisulfat, 0,2 Teile Natriumpyrophosphat und 0,4 Teile tert. Dodecylmercaptan enthält, wird der Inhalt auf 65°C erhitzt. Danach werden 10 Teile Butadien und 10 Teile Butylacrylat zugegeben und für die Dauer von 1 Stunde gerührt. Im Anschluß daran wird im Verlauf von 6 Stunden ein Gemisch aus 20 Teilen Butadien und 35 Teilen Butylacrylat kontinuierlich zugesetzt. Danach wird für die Dauer von 2 Stunden weiter polymerisiert und anschließend der Rührautoklav entspannt. Die erhaltene Polymerdispersion, die einen Feststoffgehalt von 33 % hat, zeichnet sich durch eine enge Teilchengrößenverteilung aus, wobei ein mittlerer Teilchengrößendurchmesser von 0,08 um vorliegt.

Der erhaltene Latex wurde durch Zusatz von 30 Teilen einer Emulsion eines Copolymeren aus 96 Teilen Ethylacrylat und 4 Teilen Methacrylsäureamid mit einem Feststoffgehalt von 10 Gewichtsteilen agglomeriert, wobei ein Latex mit einer mittleren Teilchengröße von 0,3 um resultierte.

Nach Zusatz von 0,1 Teilen Kaliumperoxodisulfat wurde diese Dispersion mit einer Mischung aus 25 Teilen Styrol/Acrylnitril im Mischungsverhältnis 70 : 30 im Verlauf von 2 Stunden versetzt. Danach wird weiterhin für die Dauer von einer Stunde polymerisiert. Der Umsatz, bezogen auf Styrol/Acrylnitril, lag über 99 %.

Die Aufarbeitung des erhaltenen Pfropfmischpolymerisates erfolgte, wie unter Pfropfpolymerisat (B) beschrieben.

Die Erfindung wird durch die nachfolgenden Beispiele näher erläutert. Die in den Beispielen und Vergleichsversuchen genannten Teile und Prozente beziehen sich, sofern nicht anders angegeben, auf das Gewicht.

Beispiele 1 bis 3 und Vergleichsversuche I bis III

Aus jeweils 67 Teilen der Hartkomponente und unterschiedlichen Teilen der Pfropfmischpolymerisate (B) und (C) sowie jeweils einem Teil eines Ethylenoxid/Propylenoxid-Blockcopolymerisats mit einem mittleren Molekulargewicht von ca. 3 000, 0,2 Teilen eines phenolischen Antioxidans und 4 Teilen eines Pigmentfarbstoffs wird auf einem Mischextruder bei 250°C eine Granulatmischung hergestellt.

Die Mischungsanteile der Komponente (B) und (C) sind in der nachstehenden Tabelle zusammen mit weiteren Parametern, wie Yellowness-Index und Kerbschlagzähigkeit, angegeben. Außerdem sind Werte für die Vergleichsproben I, II und III auch in der Tabelle aufgeführt.

Das Pfropfmischpolymerisat (C) der Vergleichsversuche II und III wurde analog Vergleichsversuch e der DE-OS 28 46 754 hergestellt.

Tabelle

| Beispiel | Zusammensetzung der Formmasse Teile | | | Eigenschaften | | |
|---|---|---|---|---|---|---|
| | Komp. A | Komp. B | Komp. C | Kerbschlag-zähigkeit | Yellowness-Index | Schimmelbildung |
| 1 | 67 | 18 | 15[*] | 10 | 3 | nein |
| 2 | 67 | 10 | 23[*] | 13 | 3 | nein |
| 3 | 67 | 23 | 10[*] | 9 | 2 | nein |
| Vergleichs-versuch | | | | | | |
| I | 67 | 33 | - | 6 | 2 | nein |
| II | 67 | - | 33[*] | 7 | 5 | ja |
| III | 67 | - | 33[*] | 13 | 4 | ja |

[*] $d_{50}$ Wert von 0,3 /um

[**] $d_{50}$ Wert von 0,08 /um

O.Z. 0050/035389

0074046

Patentansprüche

1. Thermoplastische Formmasse, bestehend aus

(A) einer Hartkomponente in einem Anteil von 50 bis 90 Gew.%, bezogen auf A + B + C, aus einem oder mehreren Copolymerisaten von Styrol und/oder $\alpha$-Methylstyrol mit Acrylnitril, wobei diese Copolymerisate 20 bis 40 Gew.% Acrylnitril einpolymerisiert enthalten,

(B) mindestens einem Pfropfmischpolymerisat in einem Anteil von 5 bis 45 Gew.%, bezogen auf A + B + C, das gebildet wird aus

(B$_1$) 40 bis 80 Gew.%, bezogen auf (B), eines vernetzten Acrylester-Polymerisates mit einer mittleren Teilchengröße von 0,02 bis 0,15 um (d$_{50}$-Wert der integralen Massenverteilung) als Pfropfgrundlage, worauf

(B$_2$) 20 bis 60 Gew.%, bezogen auf (B), einer Mischung von Styrol und Acrylnitril im Gewichtsverhältnis 75 : 25 bis 65 : 35 aufgepfropft ist,

(C) mindestens einem weiteren, getrennt hergestellten Pfropfmischpolymerisat in einem Anteil von 5 bis 45 Gew.%, bezogen auf A + B + C, das gebildet wird aus

(C₁) 50 bis 85 Gew.%, bezogen auf (C) eines Copolymerisats, das gebildet wird aus 20 bis 80 Gew.% Acrylsäurebutylester und/oder Acrylsäureethylhexylester und 20 bis 80 Gew.% Butadien mit einer mittleren Teilchengröße > 0,20/um ($d_{50}$-Wert der integralen Massenverteilung) worauf

(C₂) 15 bis 50 Gew.%, bezogen auf (C), einer Mischung von Styrol und Acrylnitril im Gewichtsverhältnis 75 : 25 bis 65 : 35 aufgepropft ist.

Formmasse nach Anspruch 1, dadurch gekennzeichnet, daß sie als weitere Komponente (D) übliche Zusatzstoffe enthält.

3. Verwendung der Formmasse nach Anspruch 1 zur Herstellung von Formteilen.

4. Formteile, hergestellt durch Spritzgußverarbeitung aus Formmassen gemäß Anspruch 1.

0074046
Nummer der Anmeldung

## EINSCHLÄGIGE DOKUMENTE

EP 82107944.9

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE - A1 - 2 927 572 (BASF) <br> * Gesamt, insbesondere Ansprüche * <br> -- | 1-4 | C 08 L 25/12 <br> C 08 L 51/00 <br> C 08 L 51/04 |
| A | DE - A1 - 2 716 207 (UNION CARBIDE) <br> * Ansprüche * <br> ---- | 1 | |

RECHERCHIERTE
SACHGEBIETE (Int. Cl. ³)

C 08 L 25/00
C 08 L 51/00

Der vorliegende Recherchenbericht wurde für alle Patentansprüche erstellt.

| Recherchenort <br> WIEN | Abschlußdatum der Recherche <br> 24-11-1982 | Prüfer <br> TENGLER |
|---|---|---|